Europäisches Patentamt

European Patent Office

Office européen des brevets

(11) Publication number: **0 449 348 A2**

# EUROPEAN PATENT APPLICATION

(21) Application number: **91200467.8**

(51) Int. Cl.⁵: **B62D 35/00**

(22) Date of filing: **05.03.91**

(30) Priority: **26.03.90 US 498677**

(43) Date of publication of application:
**02.10.91 Bulletin 91/40**

(84) Designated Contracting States:
**DE FR GB**

(71) Applicant: **GENERAL MOTORS CORPORATION General Motors Building 3044 West Grand Boulevard**
Detroit Michigan 48202(US)

(72) Inventor: **Lovelace, Richard Roy P.O. Box 16396**
**Clarkston, Michigan 48016(US)**

(74) Representative: **Haines, Arthur Donald et al Patent Section Vauxhall Motors Limited 1st Floor Gideon House 26 Chapel Street Luton, Bedfordshire LU1 2SE(GB)**

(54) **Air dam for a vehicle.**

(57) An air dam 36 attaches to the underside of a motor vehicle 10 and extends downwardly therefrom into proximity with the road surface and potential interference with curbs or like obstructions extending above the road surface. The air dam 36 comprises a generally rectangular flexible sheet 38 with an upper edge 40 and a lower edge 42 defining an air deflecting surface 46 therebetween. A bracket 54 attaches the upper edge 40 of the flexible sheet 38 to the underside of the motor vehicle 10 with the air deflecting surface 46 cantilevered generally horizontally forwardly of the bracket 54 so that the lower edge 42 is spaced substantially above the road surface. The air deflecting surface 46 is disposed in the oncoming airstream 34 so that the flexible sheet 38 is flexed downwardly progressively in response to the force of air pressure impinging on the air deflecting surface 46, whereby the lower edge 42 remains poised substantially above the road surface to clear obstructions extending above the road surface when the vehicle is travelling at low speeds and extends downwardly into substantial air deflecting proximity with the road surface at high vehicle speeds.

Fig. 3

EP 0 449 348 A2

The present invention relates to an air dam for a motor vehicle, and more particularly to an air dam of flexible material that self-deploys by flexing to a deployed position in response to increasing airstream velocity.

It is well known in motor vehicles that the aerodynamic characteristics of the vehicle body can be improved by an air dam mounted underneath the front of the motor vehicle and extending into proximity with the road surface. Such air dams may improve the handling and control of the motor vehicle and can also improve the routing of the air flow to the engine cooling system.

A disadvantage of the use of an air dam suspended underneath the front of the motor vehicle is that it may be damaged by impact with obstructions such as driveway slopes and curbs. It has also been recognized that the aerodynamic performance of the air dam varies with the speed of the vehicle.

Accordingly, the prior art has recognized the advantage in having an air dam movably mounted beneath the front end structure of the vehicle body for movement between a non-deployed position in which the air dam is raised substantially above the road surface and a deployed position in which the air dam is lowered into proximity with the road surface. At low speeds, the air dam remains in the non-deployed position and does not produce added drag when the air dam is not needed to redirect the air flow for vehicle control or engine cooling.

In the prior art various hinges and linkages have been provided to enable movement of the air dam between the deployed and the non-deployed positions. In addition, the prior art has taught that the movement of the air dam may be provided by a mechanical or hydraulic actuator which is responsive to the vehicle speed to deploy the air dam progressively as the speed increases. In US patent 4,159,140 the air dam is mounted by hinges and links and is self-deploying by the aerodynamic influence of air pressure acting on the air dam, pivoting the air dam downwardly about its hinge and linkage arrangement.

It would be desirable to provide an improved air dam of the self-deploying type in which movement between the deployed and the non-deployed positions would be obtained by the inherent flexure characteristic of the air dam structure without necessity for hinges and links and actuators.

The present invention seeks to provide an improved air dam for a vehicle.

Accordingly, an aspect of the present invention provides an air dam for attachment to the underside of a motor vehicle as defined in claim 1.

According to another aspect of the present invention, there is provided a motor vehicle comprising an air dam as defined in claim 6.

The invention can provide an air dam structure which comprises a sheet of flexible material having a rear end rigidly attached to the understructure of the vehicle body and a forward end cantilevered into the airstream so that the oncoming airstream induces progressive flexure of the flexible material in proportion to the force applied there against by the oncoming airstream.

Preferably, when the sheet of flexible material is in a deployed position, it can deflect further back to pass over an obstruction without sustaining damage.

An embodiment of the present invention is described below, by way of illustration only, with reference to the accompanying drawings, in which:

Figure 1 is a perspective view of the front of a motor vehicle fitted with an embodiment of retractable flexing air dam shown in a non-deployed position;

Figure 2 is a sectional view of the part of the motor vehicle in front of the radiator and showing the air dam in a deployed position;

Figure 3 is a sectional view of the air dam and mounting;

Figure 4 is a plan view of the air dam;

Figure 5 is an sectional view of a second embodiment of air dam; and

Figure 6 is a sectional view of a third embodiment of air dam.

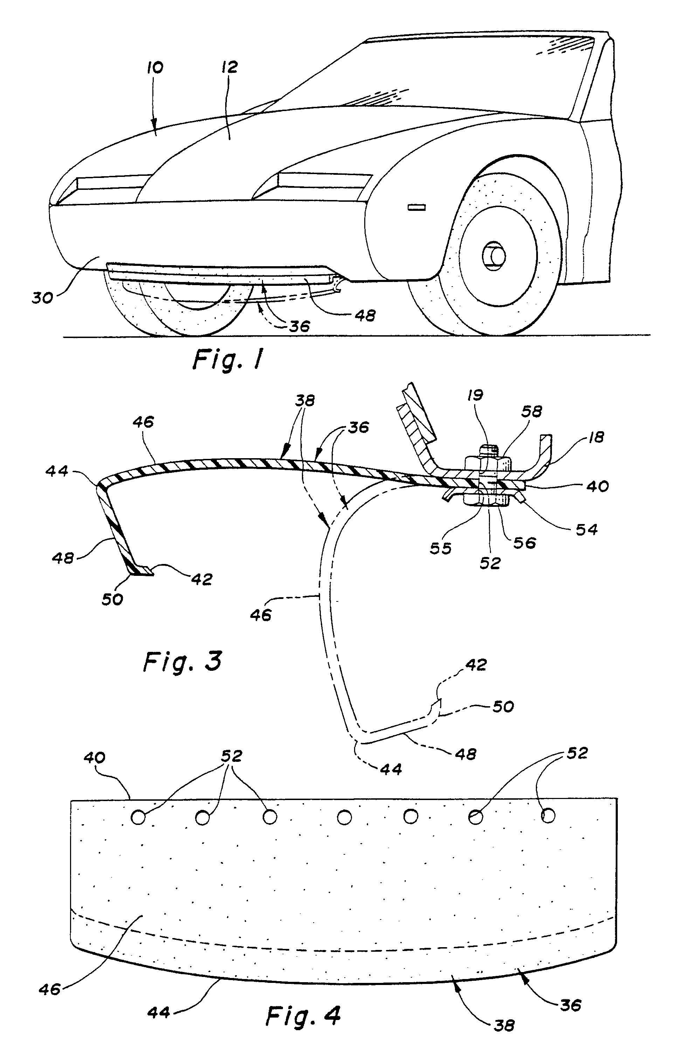

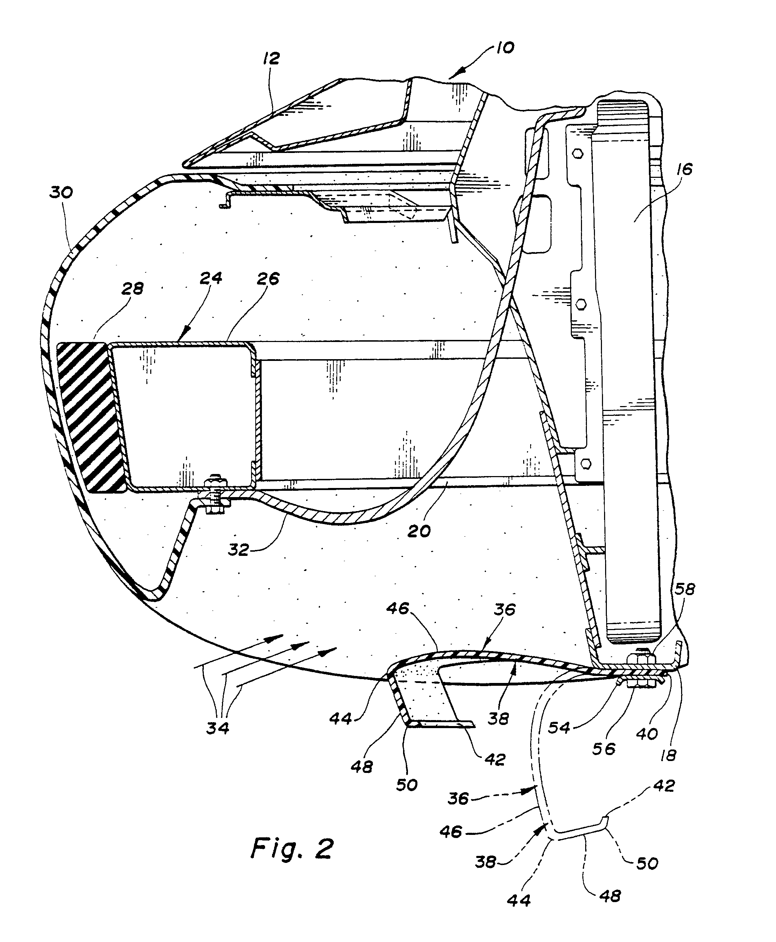

A motor vehicle 10 has a hood 12, as best seen in Figure 1, which overlies an engine compartment. In Figure 2, a radiator 16 located under the bonnet 12 is used to dissipate the heat from the vehicle engine.

The radiator 16 is mounted on a cross-member 18 which extends between a right-side rail frame 20, Figure 2, and a left-side rail frame, not shown. A bumper 24 comprises a bumper bar 26 mounted on the front of the rail frames and an absorber 28 mounted on the bumper bar 26. A bumper fascia 30 mounted in front of the bumper bar 26 conceals the bumper 24 and provides a streamlined aerodynamic appearance, as shown in Figures 1 and 2.

An air guide 32 is attached to the bottom of the bumper bar 26 and extends upwardly behind the bumper bar 26 to the top of the radiator 16 to guide the flow of air 34 through the radiator 16.

An air dam 36 moulded from a flexible rubber or plastics material 38 has an upper edge 40 and a lower edge 42, as best seen in Figures 2 and 3. A first crease or fold 44 in the material 38 divides it into a primary air deflecting surface 46 and a secondary air deflecting surface 48. The first crease 44 is curved, as shown in Figure 4, so that the secondary air deflecting surface 48 has a profile similar to the bumper fascia 30 as shown in Figure 1 for appearance sake. As seen in Figures 2 and 3, a second crease 50 is located near the lower edge 42 and adds to the rigidity of the air dam 36.

A series of holes 52 are located near the upper edge 40 of the flexible material 38, as best seen in Figure 4, for mounting the air dam 36 to cross-member 18 as shown in Figures 2 and 3. A retaining bar 54 has a set of holes 55 therein which align with the holes 52 in the flexible material 38, and is placed under the flexible material 38 to sandwich the flexible material 38 between the cross-member 18 and the retaining bar 54. A set of retaining bolts 56 extend through the holes 55 in the retaining bar 54, the holes 52 in the flexible material 38, and an aligned set of holes 19 in the cross-member 18, and are received by a set of retaining nuts 58, as seen in Figure 3.

When the vehicle 10 is stationary or moving at a relatively slow speed, the primary air deflecting surface 46 is cantilevered generally horizontally forward from the cross-member 18 as can be seen in Figure 2, for example. In this position the secondary air deflecting surface 48 projects generally vertically downward and is preferably of a colour and texture which complements the remainder of the vehicle so as to be aesthetically pleasing.

As the vehicle speed increases, the flow of air 34 impinging on the primary air deflecting surface 46 and the secondary air deflecting surface 48 increases and forces the flexible material 38 to flex over its whole area. The air dam 36 continues to flex downwardly as the speed increases and reaches the fully deployed position shown in dotted lines in Figures 2 and 3. The upper portion of the flow of air 34 is guided between the air dam 36 and the air guide 32 to pass through the radiator 16. The remainder of the flow that hits the air dam 36 passes under the vehicle 10.

The air dam 36 is in the non-deployed position or only slightly bent back at low speeds when the vehicle 10 is likely to hit obstacles such as a curb. However, should the vehicle 10 be moving at a speed at which the air dam 36 is deployed, or fully bent back, and an obstruction such as a rock or small animal pass under the vehicle 10, the flexible material 38 will flex further back to pass over the obstruction. The air dam 36 will return to the position related to the pressure of the air flow after passing over the obstruction. When the vehicle 10 is going in reverse, the air dam 36 remains in the non-deployed position since there is no flow of air hitting the primary air deflecting surface 46, or secondary air deflecting surface 48, to cause the flexible material 38 to deflect backwardly.

While the air dam 36 is shown as having a uniform thickness, and being made of a single material, the air dam can have varying thicknesses and material properties so as to vary its stiffness over its width or length. For example, the air dam could be tapered or have ribs to vary its stiffness.

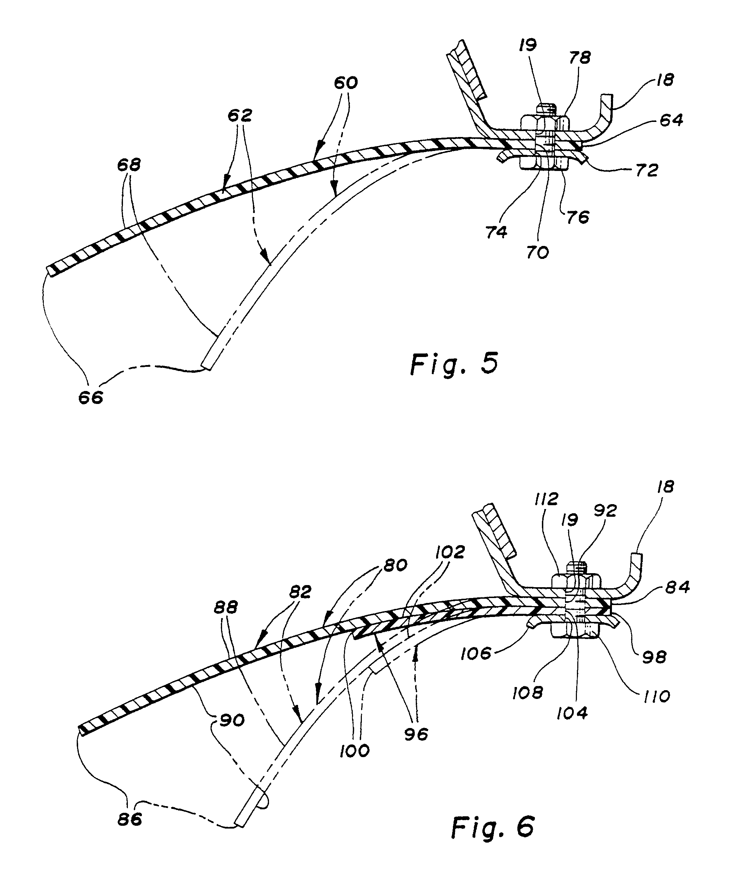

Figure 5 shows a second embodiment of an air dam 60 made from a flat sheet of rubber or other suitable material, stamped or cut to form a flexible sheet 62 which has a upper edge 64, a lower edge 66 and an air deflecting surface 68. A series of holes 70 are located near the upper edge 64 of the flexible sheet 62 for mounting the air dam 60 to the cross-member 18. A retaining bar 72 has a series of holes 74 to match the holes 70 in the flexible sheet 62 and is placed under the flexible sheet 62 to sandwich the flexible sheet 62 between the cross-member 18 and the retaining bar 72. A set of retaining bolts 76 extend through the holes 74 in the retaining bar 72, and the holes 70 in the flexible sheet 62 and align with the holes 19 in the cross-member 18 and are received by a set of retaining nuts 78. The air dam 60 sits in the non-deployed position when the vehicle 10 is stationary and in this position is hardly visible from the front of the vehicle.

As the vehicle speed increases, the flow of air hitting the air deflecting surface 68 increases and forces the flexible sheet 62 to flex over its whole area beginning near the upper edge 64. The air dam 60 continues to flex downwardly as the speed of the vehicle increases, and reaches the fully deployed position shown in dotted outline in Figure 5.

Figure 6 shows a third embodiment of air dam 80, comprising a first flexible sheet 82 of rubber or other suitable material which has a upper edge 84, a lower edge 86, an air deflecting surface 88 and a back surface 90. A series of holes 92 are located near the upper edge 84 of the first flexible sheet 82 for mounting the air dam 80 to the cross-member 18.

A second flexible sheet 96 is provided, having a upper edge 98, a lower edge 100 and a support surface 102 of smaller surface area than the back surface 90 of the first flexible sheet 82. The support surface 102 of the second flexible sheet 96 lies under and supports a portion of the back surface 90 of the first flexible sheet 82, thereby to vary the flexing and bending characteristics of the air dam 80 in relation to the flow of the air. The upper edge 84 of the first flexible sheet 82 aligns with the upper edge 98 of the second flexible sheet 96. A series of holes 104 are located near the upper edge 98 of the second flexible sheet 96 which align with the holes 92 in the first flexible sheet 82 for mounting the air dam 80 to the cross-member 18.

A retaining bar 106, having a series of holes 108 to match the holes 92 and 104 in the flexible sheets 82 and 96, is placed under the flexible sheets 82 and 96 to sandwich them between the retaining bar 106 and the cross-member 18. A set of retaining bolts 110 extend through the holes 108 in the retaining bar 106, the holes 104 in the second flexible sheet 96, the holes 104 in the first flexible sheet 82, the holes 19 in the cross-member 18, and are received by a set of retaining nuts 112. The air dam 80 is in the non-deployed position when the vehicle is stationary and the air dam 80 is substantially concealed from view.

As the vehicle speed increases, the flow of air hitting the air deflecting surface 88 increases and forces the flexible sheets 82 and 96 to flex over their whole lengths. The air dam 80 continues to flex downwardly as the speed increases and reaches the fully deployed position shown in dotted outline in Figure 6. The first flexible sheet 82 will bend differently in the portion that is supported by the support surface 102 of the second flexible sheet 96 than in the portion that is not supported, and this difference will vary with the stiffness of the second flexible sheet 96.

## Claims

1. An air dam for attachment to the underside of a vehicle comprising a flexible sheet (38) which includes first and second edges (40,42) and an air deflecting surface (46) between the first and second edges; and attaching means (52) at or proximate the first edge (40) for use in attaching the flexible sheet to the underside of a vehicle such that in use the flexible sheet (38) lies in a non-deployed position at relatively low vehicle speeds, with the air deflecting surface (46) being disposed in the on-coming air stream, and at relatively higher vehicle speeds the flexible sheet (38) is adapted to flex downwardly of the attaching means progressively to a deployed position in response to increasing air pressure impinging on the air deflecting surface (46).

2. An air dam according to claim 1, wherein the flexible sheet (38) is substantially rectangular in shape.

3. An air dam according to claim 1 or 2, wherein the flexible sheet (38) is formed with a fold (44) therein, the air deflecting surface (46) lying between the first edge (40) and the fold, a secondary air deflecting surface (48) being provided between the fold (44) and the second edge (42) which extends at an angle to the first mentioned air deflecting surface (46).

4. An air dam according to claim 1 or 2, wherein the flexible sheet (38) comprises a back surface opposite the air deflecting surface, the air dam comprising a second flexible sheet (96) which includes a support surface smaller in size than the back surface of the first mentioned flexible sheet (38) and abutting the back surface of the first flexible sheet (38) so as to vary the flexing characteristics of the first flexible sheet.

5. An air dam according to claim 4, wherein the second flexible sheet (96) is substantially rectangular in shape.

6. A vehicle comprising an air dam (36) attached to the underside of the vehicle for directing air to a radiator (16) of the vehicle, which air dam comprises a flexible sheet (38) including first and second edges (40,42), a fold (44) between the first and second edges, a primary air deflecting surface (48) between the first edge (40) and the fold (44), and a secondary air deflecting surface (48) between the fold (44) and the second edge (42) which extends at an angle to the primary air deflecting surface; and attaching means (52-58) attaching the first edge (40) of the flexible sheet to the underside of the vehicle such that in use the flexible sheet is in a non-deployed position at relatively low forward vehicle speeds, with the primary air deflecting surface (46) being cantilevered substantially forwardly of the attaching means relative to the direction of motion of the vehicle and disposed in the on-coming air stream and the secondary air deflecting surface (48) projecting substantially downwardly, and at relatively higher forward vehicle speeds the flexible sheet (38) is flexed progressively downwardly to a deployed position in response to increasing air pressure impinging on the primary air deflecting surface (46), thereby providing a lower path for the air to the radiator; the vehicle including an air guide (16) at the underside of the vehicle to the top of the radiator for providing an upper path for the air to the radiator.

*Fig. 1*

*Fig. 3*

*Fig. 4*

EP 0 449 348 A2

Fig. 2

Fig. 5

Fig. 6